# NEW EUROPEAN PATENT SPECIFICATION

(11) **EP 0 288 125 B2**
(45) Date of publication and mention of the opposition decision: **06.08.1997**
(45) Mention of the grant of the patent: 30.09.1992
(21) Application number: 88200745.3
(22) Date of filing: 20.04.1988
(51) Int. Cl.: A01B 59/048

(54) **A soil cultivating machine**
Bodenbearbeitungsmaschine
Machine à cultiver le sol

(30) Priority: 22.04.1987 NL 8700952
(43) Date of publication of application: 26.10.1988
(73) Proprietor: C. van der Lely N.V., NL-3155 PD Maasland (NL)
(72) Inventor: Bom, Cornelis Johannes Gerardus, Rozenburg (NL); Kuipers, Arie, Brielle (NL)
(74) Representative: Mulder, Herman

(56) References cited:
- EP-A- 0 047 852
- DE-A- 3 218 385
- DE-A- 3 430 352
- FR-A- 2 312 184
- Publicity brochure "WEICHEL TerraVator-System"

## Description

The invention relates to a soil cultivating machine which comprises a frame portion extending transversely to the direction of operative travel and wherein are supported in side-by-side relationship a plurality of soil working members that are power-driven about axes, the said frame portion being provided with a trestle at the front side thereof having a three-point connection for coupling to the three-point lifting hitch at the rear side of a tractor and whereby, for coupling of the machine at the front side of the tractor, there is arranged detachably a second trestle at the rear side of the frame portion, the second trestle being adjustable into a plurality of positions and lockable therein, the machine further being provided with a roller, which is adjustable in height relative to the machine.

A machine of this type is known from DE-A-32 18 385. During operation, owing to the fact that the machine is pushed forwards, the machine has a tendency to tip over to such an extent that the soil working members work deeper, which is undesirable. Another disadvantage of the above machine is that the second trestle enlarges the distance between the machine and the tractor, what results in an increasing moment of torsion of the machine, as a result of which the roller between the tractor and the machine exerts a non-controlled pressure on the treated ground.

Starting from a soil cultivating machine of the above type, the object of the invention is to provide this machine with means, with the aid of which it is ensured of a more stabile run.

According to the invention, this is achieved in that pivot pins are arranged at the bottom side of the first trestle, the roller having arms for pivotable arrangement on the pivot pins, the arms being interconnected by means of a cross beam, a length-adjustable rod being provided and having one end pivotably connected with the cross beam, the other end being adapted for direct pivotal connection with the top coupling point of the first trestle, the arrangement being such that when the machine is coupled by means of the second trestle the roller is pivotably coupled to the first trestle in a height adjustable manner relative to the machine with the length-adjustable rod being connected at its upper end with the top coupling point of the first trestle. By means of the adjustable roller it is possible to give the roller the best desirable position for a maximum support, so that the machine during operation, is prevented from tipping over. Another advantage of the present invention is that the second roller supports on the untreated ground, so preventing the treated soil from a high compaction by the first roller, while the second roller makes it at the same time possible to control the pressure of the first roller on the treated ground.

In accordance with a further characteristic of the invention, the second trestle is at its bottom side provided with plates which extend into the direction of operative travel and which are adapted to co-operate with plates provided at the bottom side of the said first trestle and extending into the direction of operative travel of the machine.

For a better understanding of the invention and to show how the same may be carried into effect, reference will now be made, by way of example, to the accompanying drawings, in which:
Figure 1 is, in plan view, a schematical rendering of a tractor having arranged at the front side thereof a machine provided with coupling means according to the invention and at the rear side thereof, schematically, a potato planting machine, and
Figure 2 is, to an enlarged scale, a view taken on the line II-II in Figure 1.

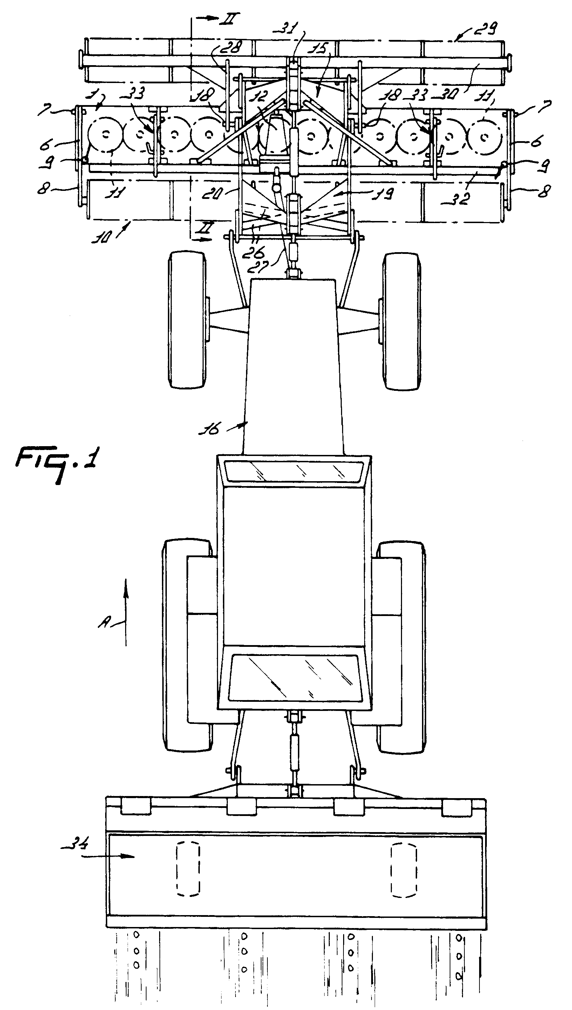

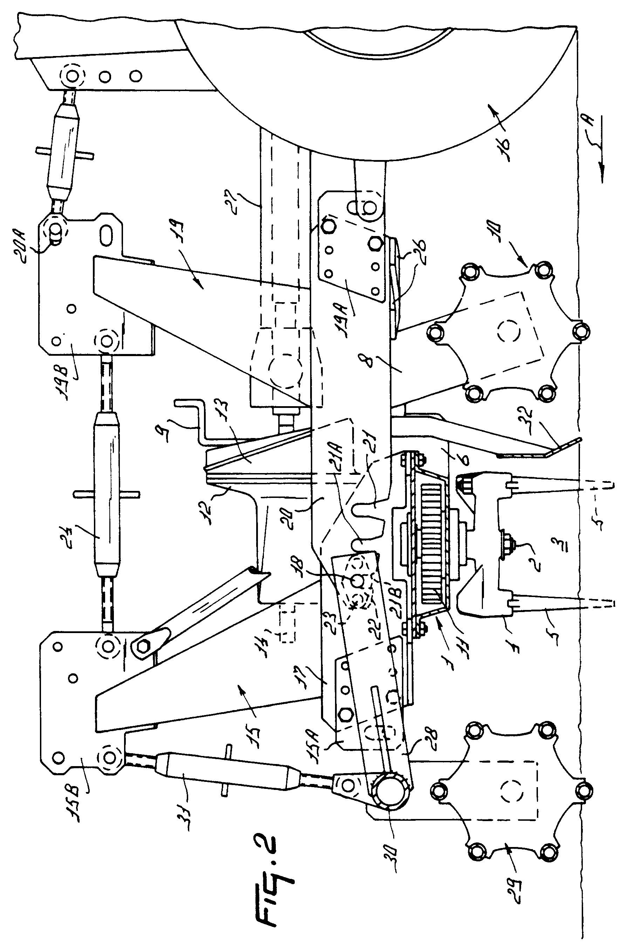

The implement shown in the drawings relates to a soil cultivating machine, in particular one for the preparation of a seed bed. The frame of the machine comprises a box-like frame portion 1 which extends transversely to the direction of operative travel A and wherein there are supported at equal interspaces of preferably 25 cms the shafts 2 of soil working members 3, which shafts extend in upward, preferably vertical, direction. At the end of each shaft 2 that projects from the bottom of the frame portion 1 there is provided a carrier 4 which extends at least substantially horizontally and near its ends is provided with downwardly extending soil working elements 5 afforded by lines. The ends of the frame portion 1 are closed by means of plates 6 extending upwardly and at least substantially parallel to a vertical plane in the direction of operative travel A. Near its front side, each of the plates 6 is provided with a pivot pin 7. About each of said pivot pins 7 there is arranged pivotably an arm 8 extending rearwardly along a plate 6. Near the rear side of each of the plates 6 there is provided for each arm 8 an adjusting device 9, by means of which the arm can be adjusted into a plurality of positions and be locked therein. Between the rear ends of the arms 8 there is arranged freely rotatably a roller 10, the arrangement being such that by means of said roller it is possible to set the working depth of the soil working elements 5 of the soil working members 3. In the embodiment shown, the roller 10 is designed as a so-called cage roller; however, it may also be designed as a packer roller. Within the box-like frame portion 1, each of the shafts 2 is provided with a pinion 11, the arrangement being such that the pinions 11 on the shafts 2 of adjacent soil working members 3 are in driving connection with each other. Near the centre of the row of soil working members, the shaft 2 of a soil working member 3 is extended upwardly. This extension reaches to into a gear box 12, inside which it is in driving connection via a bevel gear transmission with a shaft which extends in the direction of operative travel A and is supported in the gear box. Via a speed variator 13 at the rear side of the gear box, the said shaft is in driving connection with a superjacent shaft 14 which extends in the direction of operative travel A and projects beyond the gear box 12 both at the front side and at the rear side. Near its centre, the front side of the frame portion 1 is provided with a first trestle 15. In this connection, the gear box 12 together with the speed variator 13 are located between the upwardly directed legs of the trestle 15. At its front side, the trestle 15 is provided with a three-point connection for coupling to the three-point lifting hitch at the rear side of a tractor 16. The said three-point connection comprises the coupling points constituted by plates 15A and 15B. By means of upwardly directed plates 17 extending rearwardly from the trestle, said trestle 15 is mounted on the top side of the frame portion 1. Said plates 17 extend at least over the entire width of the frame portion 1 (Figure 2). Approximately in its centre, each of the plates 17 is provided at the side facing away from the other plate with a pin 18 extending at least substantially transversely to the direction of operative travel A. The longitudinal centre lines of the pins 18 are in alignment. By means of the pins 18 there is mounted to the rear side of the frame portion 1 a second trestle 19 which, as regards design, substantially corresponds to the first trestle 15 and by means of which, as is apparent from Figures 1 and 2, the machine can be coupled to the threepoint lifting hitch at the front side of the tractor 16. The second trestle 19 has a three-point connection constituted by plates 19A and 19B and, during operation, is connected by the plates 19A to the lower arms of the lifting hitch and by the plates 19B to the top arm thereof. The end of the top arm is movable to a limited extent in a slot 20A so as to allow the machine to be pivoted about the coupling points of the lower arms during operation. The second trestle 19 is provided with upwardly directed plates 20 which extend from said trestle into the direction of operative travel A and which can be connected to the sides of the plates 17 of the first trestle 15 facing away from each other (Figure 1). For this purpose, the plates 20 are provided near their front sides with a plurality of at least substantially identical, subsequent recesses 21, 21A and 21B. The said recesses 21, 21A and 21B are constituted by downwardly widening slots and are located in the forwardly slightly rising bottom side of each of the plates 20. In mounting the second trestle 19, a recess 21, 21A or 21B, respectively, can be arranged about the pin 18, depending on the desired position, after which a fixation can g plate 22. As is apparent from Figure 2, the locking plate 22 is arranged about the pin 18 and then secured on either side of the pin by means of a bolt 23. As is apparent from Figure 2, the top side of the second trestle 19 is connected to the top side of the first trestle 15 by means of a rod 24, the length of which is adjustable. Thus, by means of the pins 18 and the rod 24, the second trestle 19 is connected only to the first trestle 15 and can be applied easily when a machine is to be mounted as indicated in the drawings, while it can also be removed quickly and easily when no longer needed. At their bottom sides, the plates 20 are interconnected by means of crossing support strips 26. In case, as indicated in the drawings, the machine is mounted at the front side of the tractor, upon movement into the direction shown by arrow A there can be obtained, by means of an intermediate shaft 27 via the shaft 14, the transmission inside the gear box 12, the speed variator 13 and the pinions 11 present inside the frame portion 1, a drive for the soil working members 3, whereby adjacent soil working members rotate in opposite directions (Figure 1) and by means of their soil working members 5 cultivate at least adjoining strips of soil. As was already stated in the foregoing, the working depth of the soil working elements of the soil working members 5 can be set by means of the roller 10.

During operation, owing to the fact that it is pushed forwards, the machine has a tendency to tip over to such an extent that the soil working members work deeper, which is undesirable. In order to prevent this, in front of the machine there is arranged a roller 29 by means of arms 28 which are pivotable about the pins 18. In the embodiment shown, the roller 29 extends over the entire working width of the machine; however, it may also be of a smaller width. Above the roller 29, the arms 28 are interconnected by means of a cross beam 30. Near its centre, the cross beam 30 is connected pivotably to a length-adjustable rod 31, which is connected pivotably to the plates 15B at the top side of the first trestle 15. Thus, the roller 29 is carried by the trestle 15 only. By means of the rod 31, the roller can be given the best desirable position for a maximum support. Moreover, the soil to be cultivated can be given a pre-treatment.

Between the soil working members 3 and the roller 10 there is fitted a crumbling plate 32 which, as is shown schematically in Figure 1, is arranged by means of pivotable rod polygons 33 located at some interspace. When fitted to the front side of a tractor in the manner as described, the above-described machine can be employed excellently in rendering a field suitable for planting potatoes. In this connection, a direct planting of potatoes can be achieved by arranging a potato planting machine 34 to the three-point lifting hitch at the rear side of the tractor 16. Acting thus, there is obtained a combination which is properly balanced as regards weight distribution, while it is possible to see to it that no potatoes are planted in the tractor wheel tracks. The track width to be used should be a multiple of the planting interspace of preferably 75 cms.

In case the machine is to be fitted to the lifting hitch at the rear side of the tractor, the locking plate 22 can be removed and, after detachment of the rod 24, the second trestle 19. In combination with the pins 18 on the plates 17 of the first trestle 15, the recesses 21, 21A, 21B constitute adjusting means, with the aid of which it is possible to adjust the second trestle 19 to a more forward or rearward position, thus obtaining an adaptation to the type of three-point lifting hitch present at the front side of the tractor. A further adaptation can be achieved in that, by means of the rod 24 which can be arranged in either of two slots in the plates 19B and is adjustable in length, the trestle 19 is adapted to pivot about the pins 18, as a result of which the height of the lower coupling points of the three-point connection can be changed. The possiblity of adaptation is advantageous in that, as regards the lifting hitch at the front side of the tractor, the user may choose between differently priced ones and is not compelled to buy an extremely expensive one. After the second trestle 19 has been removed, the pins 18 can be used for applying coupling arms for use in mounting a seed drill behind the machine. Then, the machine is mounted on the three-point lifting hitch at the rear side of the tractor 16 by means of the first trestle 15. In this connection, it is obvious that the roller 29 should be removed as well.

It is also possible for the machine together with the two rollers 10 and 29 to be mounted at the rear side of the tractor. In that case, it is then also fitted to the three-point lifting hitch of the tractor by means of the trestle 15, the rod 31 for the adjustment of the roller being arranged out of the centre and the top rod for the coupling to the tractor being provided with a slot which corresponds to the slot 20A and which serves the same purpose. A seed drill may be arranged behind the roller 10.

## Claims

1. A soil cultivating machine which comprises a frame portion (1) extending transversely to the direction of operative travel (A) and wherein are supported in side-by-side relationship a plurality of soil working members (3) that are power driven about axes, the said frame portion (1) being provided with a first trestle (15) at the front side thereof having a three-point connection (15A, 15B) for coupling to the three-point lifting hitch at the rear side of a tractor and whereby, for coupling of the machine at the front side of the tractor, there is arranged detachably a second trestle (19) at the rear side of the frame portion (1), the second trestle (19) being adjustable into a plurality of positions and lockable therein, the machine further being provided with a roller (29), which is adjustable in height relative to the machine, characterized in that pivot pins (18) are arranged at the bottom side of the first trestle (15), the roller (29) having arms (28) for pivotable arrangement on the pivot pins, the arms being interconnected by means of a cross beam (30), a length-adjustable rod (31) being provided and having one end pivotably connected with the cross beam,, the other end being adapted for direct pivotal connection with the top coupling point (15B) of the first trestle, the arrangement being such that when the machine is coupled by means of the second trestle the roller (29) is pivotably coupled to the first trestle in a height adjustable manner relative to the machine with the length-adjustable rod being connected at its upper end with the top coupling point of the first trestle.

2. A soil cultivating machine as claimed in claim 1, characterized in that, at its bottom side, the second trestle (19) is provided with plates (20) which extend into the direction of operative travel (A) and which are adapted to co-operate with plates (17) provided at the bottom side of the said first trestle (15) and extending into the direction of operative travel (A) of the machine.

3. A soil cultivating machine as claimed in claim 2, characterized in that the plates (17) at the bottom side of the said first trestle (15) are provided with a pin (18) which is adapted to co-operate wih a plurality of subsequent recesses (21, 21A, 21B) at the bottom side of the plates (20) located at the bottom side of the said second trestle (19).

4. A soil cultivating machine as claimed in claim 3, characterized in that the recesses (21, 21A, 21B) are constituted by upwardly extending slots which are open at their bottom side.

5. A soil cultivating machine as claimed in claim 4, characterized in that the slots (21, 21A, 21B) are wider at their bottom side than at their top side.

6. A soil cultivating machine as claimed in any one of claims 3 to 5, characterized in that there is provided a locking plate (22) for fixing the pin (18) in a recess (21, 21A, 21B).

7. A soil cultivating machine as claimed in claim 6, characterized in that the locking plate (22) is provided with an aperture for passing through the pin (18) and, in addition, with means for locking the locking plate on the plate-shaped portions (17) at the bottom side of the said second trestle (19).

## Patentansprüche

1. Bodenbearbeitungsmaschine mit einem quer zur Arbeitsrichtung (A) verlaufenden Rahmenteil (1), in dem nebeneinander mehrere Bodenbearbeitungsglieder (3) abgestützt sind, die um Achsen zwangläufig angetrieben sind, wobei das Rahmenteil (1) an seiner Vorderseite mit einem ersten Anbaubock (15) versehen ist, der einen Dreipunkt-Anschluß (15A, 15B) zur Verbindung mit der heckseitigen Dreipunkt-Hebevorrichtung eines Schleppers aufweist, und wobei zum Anschließen der Maschine an die Frontseite des Schleppers ein zweiter Anbaubock (19) an der Rückseite des Rahmenteiles (1) lösbar befestigt ist, wobei der zweite Anbaubock (19) in mehrere Positionen einstellbar und in ihnen verriegelbar ist, und wobei die Maschine ferner eine Walze (29) aufweist, die relativ zu der Maschine höhenverstellbar ist,
dadurch gekennzeichnet, daß an der Unterseite des ersten Anbaubockes (15) Schwenkstifte (18) angeordnet sind, an denen Arme (28) der Walze (29) schwenkbar anzubringen sind, wobei die Arme mittels eines Querbalkens (30) miteinander verbunden sind, und wobei eine längenverstellbare Stange (31) vorhanden ist, deren eines Ende mit dem Querbalken schwenkbar verbunden ist und deren anderes Ende unmittelbar mit dem oberen Anschlußpunkt (15B) des ersten Anbaubockes schwenkbar zu verbinden ist, wobei die Anordnung so getroffen ist, daß bei mittels des zweiten Anbaubockes angeschlossener Maschine die Walze (29) mit dem ersten Anbaubock schwenkbar und relativ zu der Maschine höhenverstellbar verbunden ist und die längenverstellbare Stange an ihrem oberen Ende mit dem oberen Anschlußpunkt des ersten Anbaubockes verbunden ist.

2. Bodenbearbeitungsmaschine nach Anspruch 1,
dadurch gekennzeichnet, daß der zweite Anbaubock (19) an seiner Unterseite mit Platten (20) versehen ist, die in Arbeitsrichtung (A) ausgerichtet und zum Zusammenwirken mit Platten (17) ausgebildet sind, die an der Unterseite des ersten Anbaubockes (15) vorgesehen sind und sich in Arbeitsrichtung (A) der Maschine erstrecken.

3. Bodenbearbeitungsmaschine nach Anspruch 2,
dadurch gekennzeichnet, daß die Platten (17) an der Unterseite des ersten Anbaubockes (15) mit einem Stift (18) versehen sind, der zum Zusammenwirken mit mehreren aufeinanderfolgenden Ausnehmungen (21, 21A, 21B) an der Unterseite der Platten (20) vorgesehen ist, die an der Unterseite des zweiten Anbaubockes (19) angeordnet sind.

4. Bodenbearbeitungsmaschine nach Anspruch 3,
dadurch gekennzeichnet, daß die Ausnehmungen (21, 21A, 21B) durch aufwärts gerichtete Schlitze gebildet sind, die nach unten offen sind.

5. Bodenbearbeitungsmaschine nach Anspruch 4,
dadurch gekennzeichnet, daß die Schlitze (21, 21A, 21B) an ihrer Unterseite weiter sind als an ihrer Oberseite.

6. Bodenbearbeitungsmaschine nach einem der Ansprüche 3 bis 5,
dadurch gekennzeichnet, daß eine Verriegelungsplatte (22) zur Festlegung des Stiftes (18) in einer Ausnehmung (21, 21A, 21B) vorgesehen ist.

7. Bodenbearbeitungsmaschine nach Anspruch 6,
dadurch gekennzeichnet, daß die Verriegelungsplatte (22) eine Öffnung für den Durchtritt des Stiftes (18) und außerdem Verriegelungsmittel zum Verriegeln an den plattenförmigen Teilen (17) aufweist, die sich an der Unterseite des zweiten Anbaubockes (19) befinden.

## Revendications

1. Machine à cultiver le sol qui comprend une partie de châssis (1) s'étendant transversalement au sens de marche (A) du travail et dans laquelle sont supportés côte à côte une pluralité d'organes de travail du sol (3) qui sont entraînés par un moteur autour d'axes, ladite partie de châssis (1) étant munie d'un premier chevalet (15) sur son côté antérieur, ce chevalet ayant une liaison à trois points (15A, 15B) pour le couplage au dispositif d'attelage-levage à trois points à l'arrière d'un tracteur, tandis que, pour le couplage de la machine à l'avant du tracteur, un deuxième chevalet (19) est monté de manière amovible sur le côté postérieur de la partie de châssis (1), le deuxième chevalet (19) étant réglable en une pluralité de positions et pouvant y être verrouillé, la machine étant munie en outre d'un rouleau (29) qui est réglable en hauteur par rapport à la machine,
**caractérisée** en ce que des pivots (18) sont disposés au côté inférieur du premier chevalet (15), le rouleau (29) ayant des bras (28) pour être montés pivotants sur les pivots, les bras étant reliés l'un à l'autre au moyen d'une traverse (30), une barre (31) de longueur réglable étant prévue et ayant une extrémité articulée avec la traverse, l'autre extrémité étant adaptée pour une liaison pivotante directe avec le point de couplage supérieur (15B) du premier chevalet, l'agencement étant tel que, quand la machine est couplée au moyen du deuxième chevalet , le rouleau (29) est couplé de manière pivotante au premier chevalet, d'une manière réglable en hauteur par rapport à la machine, avec la barre de longueur réglable étant reliée à son extrémité supérieure au point de couplage supérieur du premier chevalet.

2. Machine à cultiver le sol selon la revendication 1, caractérisée en ce que le deuxième chevalet (19) est muni, à son côté inférieur, de plaques (20) qui s'étendent dans le sens de marche (A) du travail et qui sont adaptées pour coopérer avec des plaques (17) prévues au côté inférieur dudit premier chevalet (15) et s'étendant dans le sens de marche (A) du travail de la machine.

3. Machine à cultiver le sol selon la revendication 2, caractérisée en ce que les plaques (17) au côté inférieur dudit premier chevalet (15) sont munies d'un pivot (18) qui est adapté pour coopérer avec une pluralité d'encoches successives (21, 21A, 21B) au côté inférieur des plaques (20) situées au côté inférieur dudit deuxième chevalet (19).

4. Machine à cultiver le sol selon la revendication 3, caractérisée en ce que les encoches (21, 21A, 21B) sont constituées par des fentes s'étendant vers le haut qui sont ouvertes à leur côté inférieur.

5. Machine à cultiver le sol selon la revendication 4, caractérisée en ce que les encoches (21, 21A, 21B) sont plus larges à leur côté inférieur qu'à leur côté supérieur.

6. Machine à cultiver le sol selon l'une quelconque des revendications 3 à 5, caractérisée en ce qu'il est prévu une plaque de verrouillage (22) pour fixer le pivot (18) dans une encoche (21, 21A, 21B).

7. Machine à cultiver le sol selon la revendication 6, caractérisée en ce que la plaque de verrouillage (22) est munie d'une ouverture de passage du pivot (18) et, en outre, de moyens pour bloquer la plaque de verrouillage sur les parties (17) en forme de plaques au côté inférieur dudit deuxième chevalet (19).
